# EUROPÄISCHE PATENTANMELDUNG

(11) **EP 1 386 533 A1**
(43) Veröffentlichungstag der Anmeldung: **04.02.2004**
(21) Anmeldenummer: 03015138.5
(22) Anmeldetag: 04.07.2003
(51) Int. Cl.: A01F 29/10

(54) **Anlenkung der beweglichen Presswalze vor einer Messertrommel eines Häckslergebläses**

(30) Priorität: 31.07.2002 DE 10235096
(71) Anmelder: CLAAS Saulgau GmbH, 88348 Bad Saulgau (DE)
(72) Erfinder: Rauch, Hans, 88348 Bad Saulgau (DE)

(57) **Zusammenfassung**

Häckslergebläse mit einer in einem Häckslergehäuse 1 oder auf einem rahmenbildenden Gestell zur Lagerung der Häckslertrommel gelagerten, umlaufend angetriebenen Messertrommel (2), mit den der Messertrommel (2) vorgelagerten Presswalzen (6,7), wobei eine der vorgelagerten Presswalzen (7) relativ zur Messertrommel (2) beweglich in Schwingen gelagert ist, wobei die relativ zur Messertrommel (2) bewegliche Presswalze (7) in wenigstens einem Gehäuse (25) als Bestandteil eines Koppelgetriebes (10) gelagert ist.

## Beschreibung

Die Erfindung betrifft eine Anlenkung einer beweglichen Presswalze vor einer Messertrommel eines Häckselgebläses gemäss dem gattungsbildenden Oberbegriff des Anspruchs 1.

Eine einer Messertrommel direkt vorgelagerte Presswalze ist höhenbeweglich angetrieben und gelagert, um sich der Masse des zu häckselnden Gutstroms hinsichtlich der Spaltweite anpassen zu können. Dabei soll der Abstand zum Zentrum der Messertrommel unabhängig von der momentanen Spaltweite, die abhängig ist von der momentanen Höhenlage der Vorpresswalze, möglichst konstant sein.

Diese Forderung würde dann exakt erfüllt, wenn die Presswalze an Schwingen gelagert wäre, die mit dem einen Ende drehbar auf der Welle der Messertrommel gelagert wären und dessen anderes Ende die Lager der Presswalze beinhaltet. Aus baulichen Gründen führt dieses aber zu erheblichen Problemen, die die Erfindung beseitigen soll.

Dabei ist die Führungssteifigkeit der Anlenkung ebenfalls von zentraler Bedeutung, da eine weitere Forderung die der höhenunabhängigen Parallelität der Achsen der Messertrommel und der Presswalze ist.

Aufgabe der Erfindung ist es daher, eine Anlenkung einer Presswalze vor einer Messertrommel eines Häckselgebläses zu schaffen, die unter den vorgegebenen Bedingungen der Abstands- und Parallelitätskonstanz eine hohe Führungssteifigkeit beinhaltet.

Gelöst wird die Aufgabe der Erfindung mit den kennzeichnenden Merkmalen des unabhängigen Hauptanspruchs. Weitere vorteilhafte Ausgestaltungen der Erfindung sind den abhängigen Ansprüchen, der Beschreibung und den Figurendarstellungen zu entnehmen.

Die Erfindung löst das Problem, indem die besagte Presswalze mittels eines Koppelgetriebes um die Achse der Messertrommel so geführt wird, dass die Achse der Presswalze näherungsweise auf einem konstanten Radius um den Mittelpunkt der Messertrommel unabhängig von der momentanen Höhenlage innerhalb der für den Betrieb notwendigen Spaltbreite des Guteinzugs liegt.

Dabei stützen sich die der Koppelgelenke an dem rahmenbildenden Gestell der Lagerung der Häckslertrommel direkt oder indirekt ab, wobei das Lagergehäuse der Presswalze selbst eine Koppel in die Gelenkkette des Koppelgetriebes darstellt, d.h. in diesem eingebunden ist. Wegen der Längserstreckung und der hierfür erforderlichen Führungssteifigkeit der Presswalze hinsichtlich der Parallelitätsbedingung wird die Presswalze an beiden in entsprechenden Lagergehäusen je eines Koppelgetriebes geführt. Dabei können die beiden so beabstandeten Koppelgetriebe durch einen verwindungssteifen Torsionslenker miteinander in Wirkverbindung stehen, welche eventuelle Elastizitäten und daraus resultieren Lageabweichungen der gegenüberliegenden Lagerungen der Presswalze innerhalb eines jeden Koppelgetriebes unterdrücken.

Die nachfolgenden Figurendarstellungen verdeutlichen den Gegenstand der Erfindung.

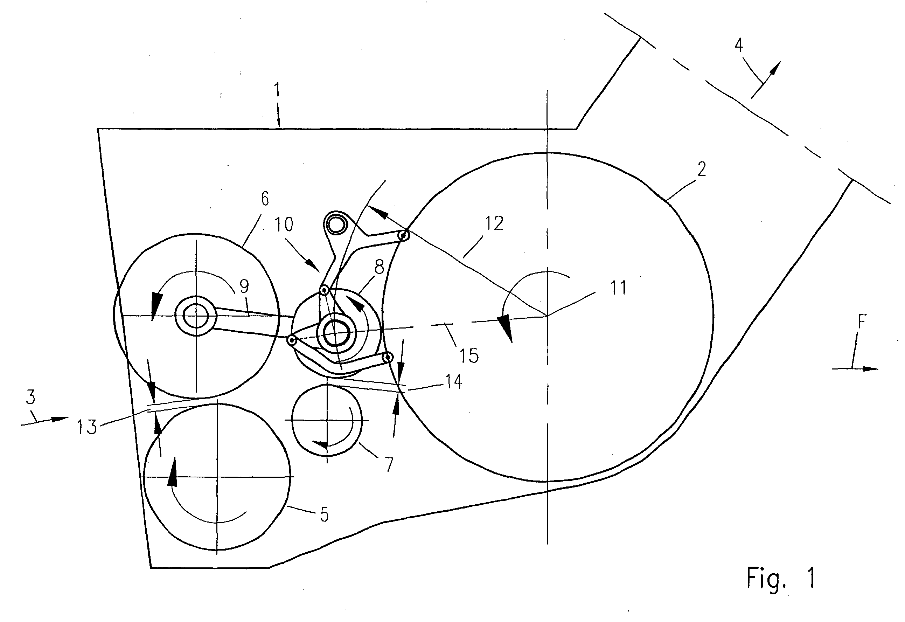

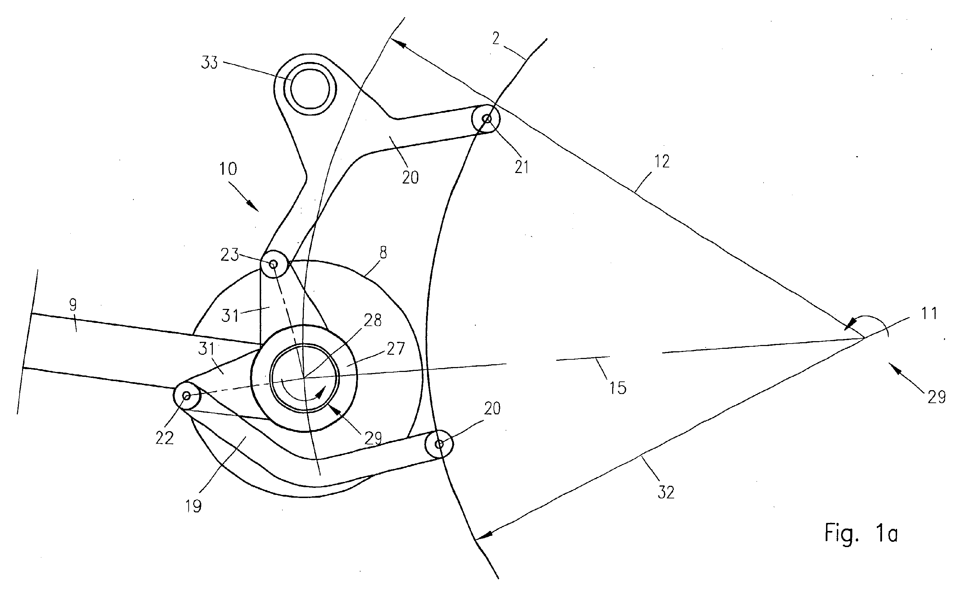

Fig.1 zeigt den prinzipiellen Aufbau eines Häckslergebläses von der Seite gesehen im Schnitt. Der Fahrtrichtungspfeil F gibt dabei die Orientierung vor, wobei die Einlassseite 3 und die Auslassseite 4 durch einen Richtungspfeil gekennzeichnet sind.

Die Messertrommel 2 ist in einem Häckslergehäuse 1 umlaufend angetrieben gelagert. Der Messertrommel 2 vorgelagert sind die Vorpresswalzen 5 und 6 und die Presswalzen 7 und 8. Die untere Vorpresswalze 5 und die untere Presswalze 7 sind in bezug auf die Messertrommel 2 ortsfest gelagert. Die Vorpresswalze 6 hingegen ist höhenbeweglich an einer Schwinge 9 gebunden gelagert, wobei die Schwinge 9 ortsfest an der Drehachse der Presswalze 8 gebunden ist. Die Presswalze 8 hingegen ist nach der Erfindung in ein Koppelgetriebe 10 eingebunden, welches eine Relativbewegung um den Mittelpunkt 11 der Messertrommel 2 auf einem Radius 11 ermöglicht. Die Drehrichtungen der Vorpresswalzen, der Presswalzen und der Messertrommel sind durch Drehrichtungspfeile gekennzeichnet. Die Häckseleinrichtung ist in ihrer Grundstellung mit der geringsten Einzugsspaltbreite 13 und 14. dargestellt.

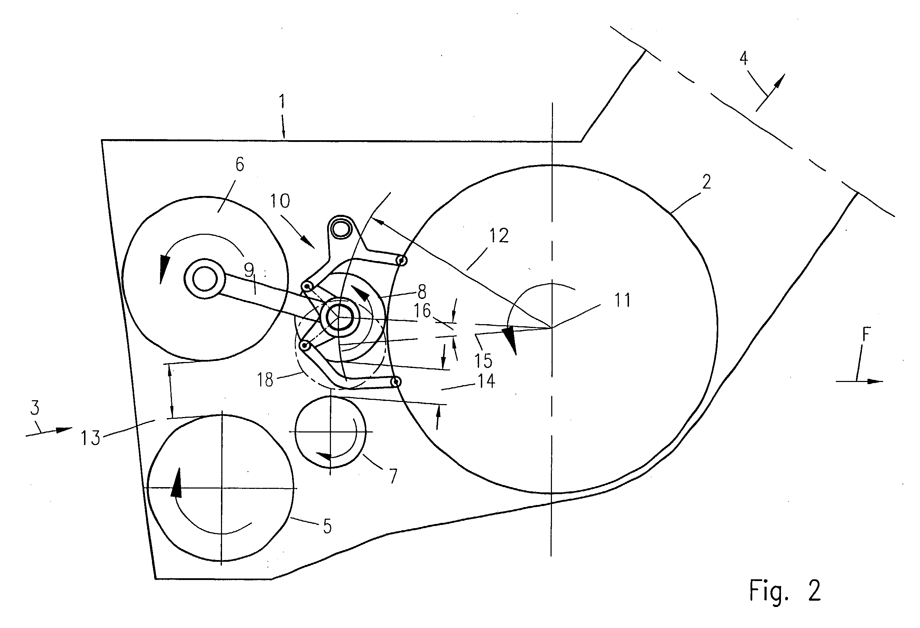

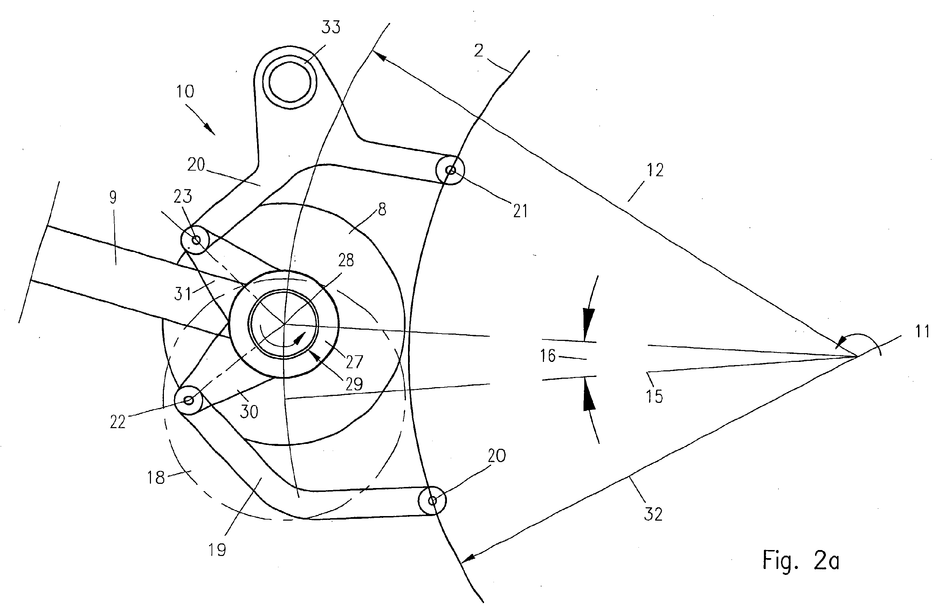

Fig. 2 zeigt das Häckselgehäuse analog der Fig.1, wobei in der Darstellung die Presswalze 8 eine Verschiebung erfahren hat. Durch die Vergrößerung der Einzugsspaltweite von 14 auf 14" bewegte sich die Presswalze 8 etwa auf dem Radius 12 mit dem Schwenkwinkel 17, so das die Presswalze 8 gegenüber ihrer Lage in Fig.1, die durch die Kontur 18 in Verbindung mit dem Radiusstrahl 15 gekennzeichnet ist, eine noch größre Verschiebung erfahren hat, als dieses in der Fig.2 der Fall war.

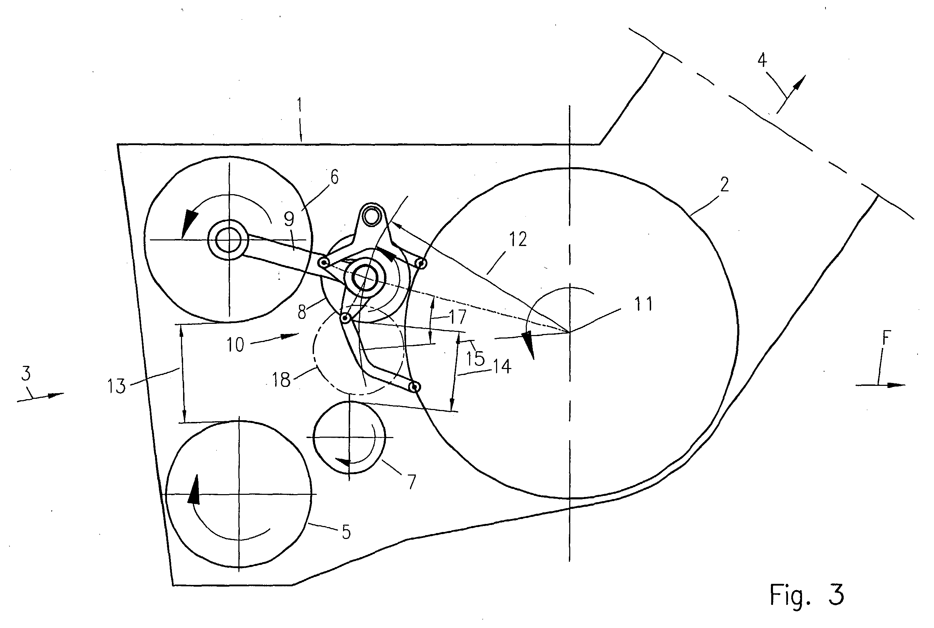

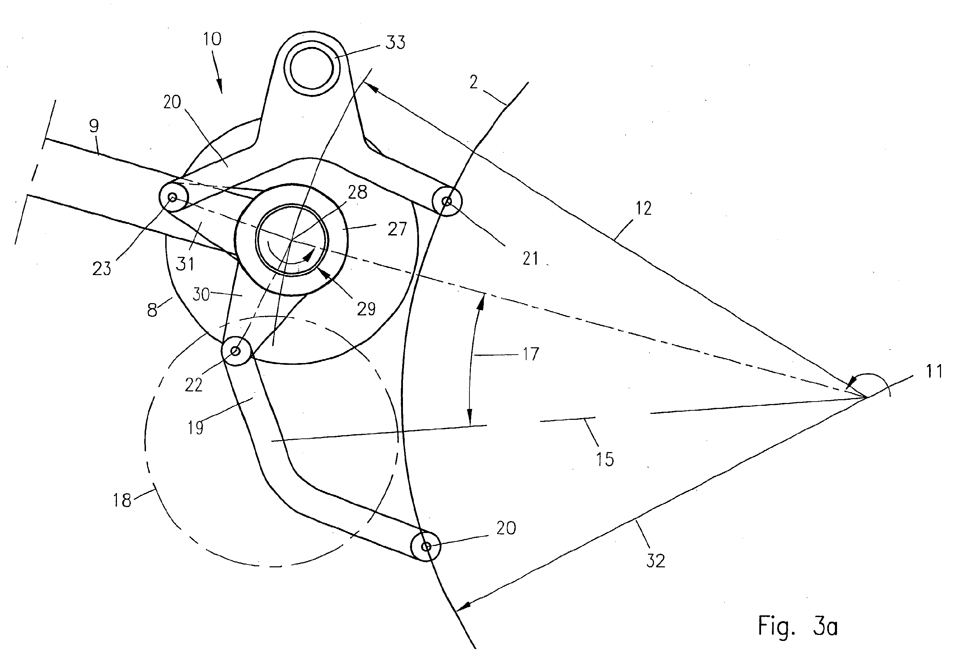

Fig.1 a zeigt einen vergrößerten Ausschnitt aus der Fig.3 Das Koppelgetriebe 10 besteht aus den abgewinkelten Lenkern 19 und 20 als Koppelglieder eines 4-Gelenkgetriebes, die in den Gelenkpunkten 21 und 22 an einem nicht näher dargestellten rahmenbildenden Gestell der Lagerung der Häckslertrommel angelenkt sind. Die übrigen zwei Gelenkpunkte 22 und 23 befinden sich am jeweils anderen Ende der Lenker 19,20, wobei an diesen Gelenkpunkten 22,23 das Lagergehäuse 25 gelenkig eingebunden ist.

Das Lagergehäuse 25 beinhaltet eine Lagerbohrung 29, die ihren Sitz auf einem Lagersitz der Welle der Presswalze hat. Dabei weist die Nabe 27 des Lagergehäuses 25 zwei radial nach außen weisende Hebel 30,31 auf, die homogener Bestandteil des Lagergehäuses 25 sind. An den Enden der Hebel greifen die abgewinkelten Lenker 19,20 in den Gelenkpunkten 22,23 an.

Wie anhand der Figuren Fig. 2a und Fig. 3a leicht nachvollziehbar, tritt bei einer Lageverschiebung der Presswalze 8, hervorgerufen durch den zu häckselnden Gutstrom, der eine Veränderung der Einzugsspaltbreit 14 bewirkt, bedingt durch die Kopplung zwischen den Gelenkpunkten 21,22,23,24 mittels der Lenker 19 und 20 an dem Lagergehäuse 25 gleichzeitig eine Schiebung und eine Drehung ein. Dabei bewirkt die Geometrie und die Lage der Gelenkpunkte 21,22,23,24, dass sich die Drehachse 28 der Presswalze 8 in einem hinreichenden Verstellbereich näherungsweise auf einem Radius 12 bewegt. In der Praxis hat sich dabei herausgestellt, dass sich dabei eine besonders günstige Lage der Gelenkpunkte 21 und 22 ergibt, wenn diese etwa auf dem Radius 32 der Außenkontur der Messertrommel liegen.

Die Abwinkelung der Lenker 19 und 20 erfolgt deshalb, damit sich diese nicht mit den Naben des Gehäuses kollidieren und sich gegenseitig zu durchdringen trachten.

Dabei befinden sich beidseitig an jedem Ende der Presswalze 8 derartige Lagergehäuse 25 und je ein Koppelgetriebe 10. Oberhalb der Lenker 20 sind diese untereinander mit einem Torsionsstab 33, beispielsweise ausgebildet als Rohrquerschnitt, verbunden. Dieses bewirkt bei hinreichender Steife der Lenkerkonstruktion, dass die Lagergehäuse 25 stets nur synchron Ihre Lage verändern können, wodurch die Parallelitätsforderung erfüllt ist.

### Bezugszeichenliste

- 1: Häckslergehäuse
- 2: Messertrommel 2
- 3: Einlassrichtung
- 4: Auslassrichtung
- 5: Vorpresswalzen
- 6: Vorpresswalzen
- 7: Presswalzen
- 8: Presswalzen
- 9: Schwinge
- 10: Koppelgetriebe
- 11: Mittelpunkt
- 12: Radius
- 13,13',13": Einzugsspaltbreite
- 14,14',14": Einzugsspaltbreite
- 15: Radiusstrahl
- 16: Schwenkwinkel
- 17: Schwenkwinkel
- 18: Kontur
- 19: Lenker
- 20: Lenker
- 21: Gelenkpunkt
- 22: Gelenkpunkt
- 23: Gelenkpunkt
- 24: Gelenkpunkt
- 25: Lagergehäuse
- 26: Achszapfen
- 27: Nabe
- 28: Drehachse
- 29: Lagerbohrung
- 30: Hebel
- 31: Hebel
- 32: Radius
- 33: Torsionsstab

## Patentansprüche

1. Häckslergebläse mit einer in einem Häckslergehäuse 1 oder auf einem rahmenbildenden Gestell zu der Lagerung der Häckslertrommel gelagerten, umlaufend angetriebenen Messertrommel (2), mit den der Messetrommel (2) vorgelagerten Presswalzen (6,7), wobei eine der vorgelagerten Presswalzen (7) relativ zur Messertrommel (2) beweglich in Schwingen gelagert ist, **dadurch gekennzeichnet, dass** die relativ zur Messetrommel (2) bewegliche Presswalze (7) in wenigstens einem Gehäuse (25) als Bestandteil eines Koppelgetriebes (10) gelagert ist.

2. Häckslergebläse nach Anspruch 1, **dadurch gekennzeichnet, dass** das Koppelgetriebe 10 wenigstens vier Gelenkpunkte (21,22,23,24) umfasst.

3. Häckslergebläse nach Anspruch 1, **dadurch gekennzeichnet, dass** das Lagergehäuse (25) zur Lagerung der Presswalzen (7) wenigstens ein Koppelglied des Koppelgetriebes (10) ist.

4. Häckslergebläse nach Anspruch 1, **dadurch gekennzeichnet, dass** wenigstens ein Lagergehäuse (25) zur Lagerung der Presswalzen (7) wenigstens durch zwei Lenker (19,20) in Gelenkpunkten (20,21) an einem rahmenbildenden Gestell zur der Lagerung der Häckslertrommel abgestützt ist.

5. Häckslergebläse nach Anspruch 1, **dadurch gekennzeichnet, dass** das Lagergehäuse (25) zur Lagerung der Presswalzen (7) wenigstens zwei Gelenkpunkte (22) und (23) zum Anschluss von Lenkern (19,20) eines Koppelgetriebes umfasst.

6. Häckslergebläse nach Anspruch 1, **dadurch gekennzeichnet, dass** das Koppelgetriebe (10) beidseitig der Presswalzen (7) ein Verbindungselement als Torsionsstab (33) gegen relative Verdrehung der Lagergehäuse (25) aufweist.
